# DEMANDE DE BREVET EUROPEEN

(11) **EP 2 923 808 A1**
(43) Date de publication de la demande: **30.09.2015**
(21) Numéro de dépôt: 15161635.6
(22) Date de dépôt: 30.03.2015
(51) Int. Cl.: B26B 9/00, A47J 17/04

(54) **EVIDEUR DE FRUITS OU DE LEGUMES**

(30) Priorité: 28.03.2014 BE 201400205
(71) Demandeur: Pensis, Alain, 7100 Saint-Vaast (BE)
(72) Inventeur: Pensis, Alain, 7100 Saint-Vaast (BE)
(74) Mandataire: Gevers Patents

(57) **Abrégé**

Evideur comprenant un manche (1) et une lame de couteau présentant une première et deuxième faces (4, 5), ladite lame comprenant une première partie longitudinale (2) et une deuxième partie courbée (3), ladite première partie étant fixée audit manche et présentant une longueur supérieure à la longueur de ladite deuxième partie, ladite deuxième partie étant située dans le prolongement de ladite première partie, et ladite deuxième partie présente un rayon de courbure compris entre 0,5 et 3 cm et lesdites première et deuxième faces sont reliées l'une à l'autre en leur pourtour par une troisième face (6) formant l'épaisseur de ladite lame, la première face comprenant une partie parallèle à la deuxième face, ladite troisième face formant une partie inclinée s'étendant de ladite première face vers ladite deuxième face, ladite troisième partie inclinée formant avec la deuxième face un angle (y) compris entre 15-30 °.

## Description

La présente invention se rapporte à un évideur de fruits ou de légumes comprenant un manche et une lame de couteau présentant une première face et une deuxième face, ladite lame comprenant une première partie longitudinale et une deuxième partie courbée, ladite première partie étant fixée audit manche et présentant une longueur supérieure à la longueur de ladite deuxième partie de lame, ladite deuxième partie de lame étant située dans le prolongement de ladite première partie.

Le document CN 2875729 Y divulgue un couteau qui présente une lame qui définit une forme concave prévue pour couper des fruits et des légumes. Le couteau divulgué permet d'éplucher et d'évider des fruits et des légumes.

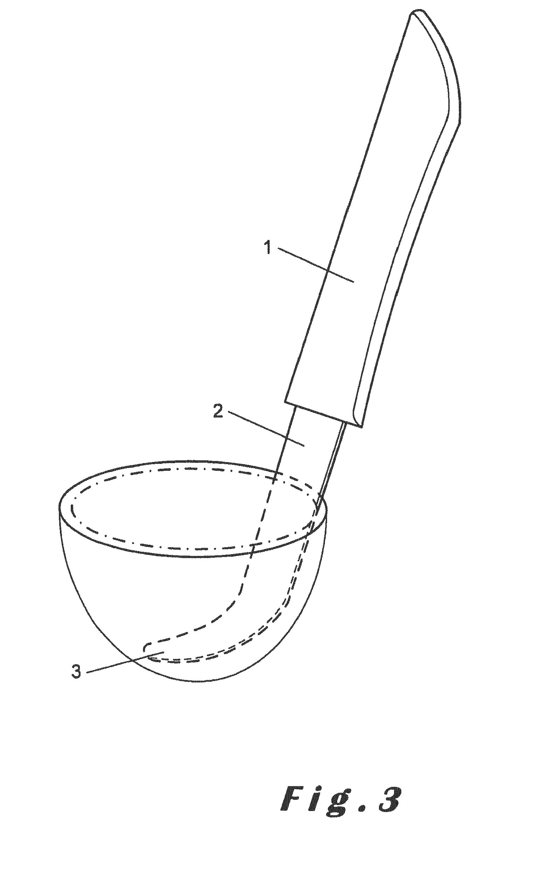

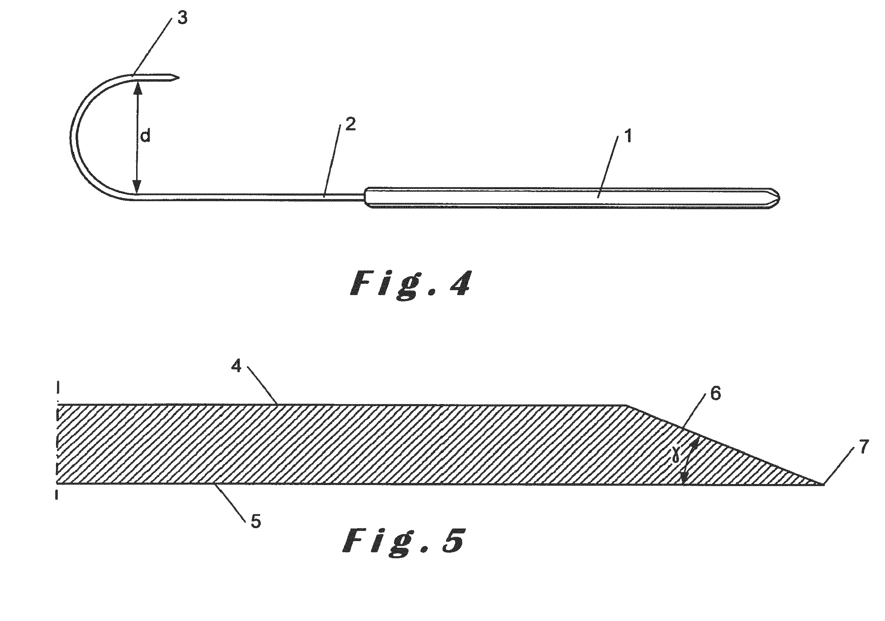

Les figures 3 à 6 reprises dans le document CN 2875729 Y illustrent différents modes de réalisations mettant en lumière les découpes pouvant être réalisées à partir du couteau divulgué. La figure 3 illustre la découpe d'un citron au moyen du couteau. Ce mode de réalisation permet seulement d'éplucher un citron. Les figures 4 et 5 représentent chacune un fruit coupé en quartier qui est épluché au moyen du couteau divulgué. Il ressort du document que l'épluchement du fruit ou du légume nécessite une découpe préalable du fruit ou du légume en quartier pour pouvoir ensuite séparer le fruit de son enveloppe.

Par conséquent, la forme du fruit épluché se présentant en quartier limite l'utilisation du fruit séparé de son enveloppe comme contenant pour des préparations culinaires diverses. En effet, la forme n'est pas adéquate pour loger, par exemple une farce.

Enfin, la figure 3 illustre l'évidement d'une pomme à l'aide du couteau développé mais l'incision est limitée par la forme concave de la lame qui ne peut extraire une quantité suffisante de chaire pour pouvoir réutiliser la pomme évidée comme contenant pour, par exemple une farce. L'évidement d'un fruit entier, comme une pomme, n'est pas pratique à l'aide du couteau proposé car ce dernier ne permet pas d'extraire la quasi-totalité de la chaire hors de la pomme.

Malheureusement, la forme concave du couteau ne permet ni d'évider une grande quantité de chaire du fruit ou du légume ni d'assurer une découpe précise et ce sans risquer de découper la surface extérieure du fruit. Par conséquent, une quantité relativement importante de la chaire du fruit ou du légume n'est pas retirée ce qui empêche de produire des fruits ou des légumes suffisamment évidés. Ce type de couteau ne sera donc pas conseillé pour réaliser l'évidement de fruits ou de légumes dans le cadre de présentations culinaires devant être contenues dans des fruits ou des légumes évidés.

L'utilisation du couteau dans le domaine de la restauration n'est donc pas adéquate pour répondre aux besoins de ce secteur très concurrentiel. En effet, dans de tels domaines, il est avantageux de pouvoir évider des fruits et des légumes de toutes tailles en un minimum de temps et ce sans porter atteinte à l'aspect extérieur du fruit ou du légume pouvant servir comme objet décoratif et comme contenant pour diverses préparations culinaires, comme des farces.

Le document US 2012 0288 601 A1 divulgue un couteau pour des noix de coco. Le couteau illustré présente une première partie longitudinale fixée au manche et une deuxième partie de forme concave qui est destinée à entrer en contact avec la chaire de la noix de coco. La première partie longitudinale n'est pas prévue pour être tranchante. Les figures 3 et 4 illustrent deux modes de réalisation lorsque le couteau est utilisé pour découper la chaire d'une noix de coco. Ainsi, pratiquement, l'utilisateur désirant évider une noix de coco maintien le manche de l'ustensile et frappe la noix de coco pour pouvoir la briser et ainsi accéder à sa chaire. Ensuite, l'utilisateur découpe la chaire de la noix de coco au moyen de la deuxième partie qui est tranchante et retire ainsi la noix de coco de sa chaire.

Malheureusement, la forme prédéfinie concave du couteau développé ne permet pas de l'utiliser pour évider tous types de fruits ou de légumes, plus particulièrement de petites tailles comme des oignons, des kiwis, des petites courgettes, des petites aubergines, sans risquer de couper la surface extérieure des fruits ou des légumes.

De plus, dans le milieu de la restauration, il est avantageux de pouvoir évider rapidement, efficacement et précisément la chaire des fruits et des légumes avec un évideur adapté à tout type de formes.

Or, les couteaux de l'état de la technique sont limités par la forme des lames de couteaux qui ne sont pas prévus pour évider tout type de fruits et de légumes, particulièrement des fruits et légumes de petites tailles. De plus, l'évidement de fruits ou de légumes au moyen des couteaux précités n'est pas reproductible, efficace et rapide pour pouvoir garantir une découpe soignée et précise dans le domaine de la restauration. Le domaine de la restauration fait appel à l'utilisation d'ustensiles fiables pouvant faciliter la mise en oeuvre de préparations culinaires en limitant le plus possible le gaspillage du produit travaillé. Dans la préparation de farces devant être contenues dans des fruits ou légumes évidés, il est avantageux de pouvoir évider rapidement, aisément, efficacement et de manière reproductible ce qui n'est pas atteint au moyen des couteux proposés actuellement.

Au vu de ce qui précède, il est manifeste qu'il existe un réel besoin de fournir un évideur de fruits ou de légumes qui soit efficace et facile à l'usage et qui soit prévu pour évider des fruits et légumes en un minimum de temps sans porter atteinte à la qualité de découpe et à l'aspect extérieur du fruit ou du légume.

L'invention a pour but de pallier les inconvénients de l'état de la technique en procurant un évideur amélioré qui permet d'évider des fruits et des légumes de différentes tailles rapidement, de manière fiable et reproductible pour pouvoir l'utiliser dans des domaines d'application tels que la restauration, plus particulièrement dans le cadre de réalisation de préparations culinaires qui nécessitent un respect du produit travaillé ainsi que de son apparence visuel après découpe.

Pour résoudre ce problème, il est prévu suivant l'invention, un évideur tel qu'indiqué au début caractérisé en ce que ladite deuxième partie courbée de ladite lame présente un rayon de courbure r compris entre 0,5 et 3 cm et en ce que lesdites première et deuxième faces de ladite lame sont reliées l'une à l'autre en leur pourtour par une troisième face formant l'épaisseur de ladite lame, ladite première face comprenant une partie parallèle à ladite deuxième face et une partie inclinée s'étendant de ladite partie parallèle vers ladite troisième face pour former un bord aminci et tranchant, ladite partie inclinée de ladite première face formant avec ladite deuxième face un angle γ compris entre 15 - 30 °.

Ladite lame comprend ainsi un bord aminci et tranchant ce qui permet de faciliter la manipulation de la lame relativement à la chaire devant être retirée du fruit ou du légume. La lame fournie présente au moins une surface inclinée en son pourtour qui permet d'accéder à la chaire d'un fruit ou d'un légume. Le bord tranchant facilite la manipulation de la lame aussi bien au moment de la découpe que pendant la découpe. En effet, le bord tranchant de la lame permet d'accéder à la chaire du fruit et de réaliser une incision avec précision même lorsque la lame est dans le coeur du fruit ou du légume.

La première partie de lame présente une forme longitudinale qui permet, par exemple de découper un fruit en deux ou encore de réaliser une incision de la chaire d'un fruit préalablement coupé en deux. De plus, la première partie de lame est plus longue que la deuxième partie courbée. Ainsi, le passage entre la première partie de lame et la deuxième partie de lame définit un point de pivot qui fait alors office d'un levier pour extraire une partie de la chaire du fruit.

La deuxième partie de lame est courbée vers la première face de la lame en direction du manche. Ainsi, la forme courbée de la deuxième partie forme un arc de cercle qui permet de définir un rayon associé audit cercle. De cette façon, le rayon lié à la courbure de la deuxième partie est ainsi déterminé et est compris entre 0,5 et 3 cm. Un tel rayon de courbure permet de fournir une partie de lame prévue pour pénétrer dans la chaire de tout type de fruits ou de légumes.

Il a été constaté que le bord tranchant dont la surface inclinée et la deuxième face formant un angle γ compris entre 15 - 30 °, la première partie et la deuxième partie courbée agissent en synergie ce qui permet d'évider efficacement, avec précision et rapidement un fruit ou un légume et ce de manière reproductible.

Par exemple, pour évider un fruit, celui-ci peut être préalablement coupé en deux au moyen de la première partie de lame éventuellement munie du bord tranchant.

Ensuite, l'utilisateur peut maintenir l'évideur au niveau du manche et orienter la deuxième partie de lame relativement à la surface du fruit de manière sensiblement horizontale de sorte que le pourtour de la deuxième partie courbée puisse entrer en contact avec la surface de la chaire du fruit. Ainsi le côté du manche et le pourtour de la lame sont dirigés vers la chaire du fruit.

Le point de pivot situé entre les première et deuxième parties de lame, éventuellement muni dudit bord tranchant, permet de découper la chaire en surface et d'accéder au fond du fruit au niveau de son enveloppe. Lorsque la deuxième partie de lame est au fond du fruit, le manche est alors maintenu dans une position sensiblement verticale relativement à la surface du fruit.

Dans cette position, la première partie longitudinale permet de découper la chaire en son pourtour et la deuxième partie de lame permet de réaliser une incision progressive au fond du fruit de manière précise.

De cette façon, la majorité de la chaire du fruit ou du légume est incisée en surface et au fond du fruit sans atteindre son enveloppe et ce grâce à la complémentarité des première et deuxième parties de lame formant l'évideur selon l'invention.

Lorsque la chaire est incisée, le fruit peut ainsi être évidé au moyen de la lame de l'évideur. Plus précisément, le point de pivot permet d'extraire la chaire hors du fruit en faisant levier à l'aide de la lame fournie.

Les première et deuxième parties coopèrent et permettent de fournir une partie de lame courbée qui présente un rayon de courbure compris entre 0,5 et 3 cm et une surface inclinée avec un angle γ compris entre 15-30°, ce qui facilite grandement l'entrée de la lame dans le fruit.

Il a été constaté que l'évidement de fruits et de légumes au moyen de l'évideur selon la présente invention est réalisé plus rapidement par rapport aux couteaux de l'état de la technique, ce qui constitue un réel atout dans le domaine de la restauration, par exemple dans la réalisation de préparations culinaires.

Préférentiellement, l'angle γ est compris entre 16 - 25 °, plus préférentiellement entre 20 - 23 °. Cela permet de fournir une lame qui est plus facilement manipulable avec le fruit ou le légume à évider.

Plus préférentiellement, ladite partie parallèle à ladite deuxième face est bordée au moins sur son pourtour exposé par ladite partie inclinée.

Dans le cadre de la présente invention, les termes « pourtour exposé » sont définis comme correspondant au pourtour de la lame qui est exposé au milieu environnant ce qui exclut le pourtour de la lame logé dans le manche.

De cette façon, la partie inclinée peut s'étendre de la première partie de lame vers la deuxième partie de lame ou uniquement au niveau de la première partie de lame ou encore uniquement sur la deuxième partie de lame.

De manière avantageuse, ladite partie parallèle à ladite deuxième face est bordée sur tout son pourtour exposé, ce qui permet d'avoir une lame aiguisée sur tout le pourtour de lame. Cela permet de faciliter la découpe ou l'évidement d'un fruit ou d'un légume. L'évideur de la présente invention présente ainsi une lame avec deux parties tranchantes ce qui rend aisé, précis, fiable l'évidement d'un fruit ou d'un légume et ce de manière reproductible.

Avantageusement, ledit rayon de courbure est compris entre 0,5 et 2,5 cm, de préférence entre 0,5 et 2 cm, plus préférentiellement entre 0,7 et 2 cm. De cette façon, l'entrée de la deuxième partie de lame est rendu encore plus aisée. La partie courbée offre ainsi une surface d'attaque qui facilite également l'entrée de la lame dans le coeur du fruit ou du légume.

De manière encore plus avantageuse, la première partie longitudinale présente une longueur comprise entre 1 et 25 cm, de préférence entre 1 et 20 cm, plus préférentiellement entre 5 et 15 cm.

De préférence, la deuxième partie courbée forme un demi-cercle.

Plus préférentiellement, la lame de l'évideur selon l'invention est une lame à double tranchant qui permet ainsi de fournir un évideur qui présente une lame tranchante sur plus d'un côté.

Selon un mode préféré de la présente invention, la lame est en matière choisie dans le groupe constitué du fer, de l'acier, de l'inox, de la céramique.

De manière préférentielle, le manche est en matière choisie dans le groupe constitué d'élastomères, de préférence d'élastomères thermoplastiques, du bois, de la céramique, d'inox, de la céramique.

De manière encore plus avantageuse, le manche de l'évideur selon l'invention est muni d'un élément antidérapant.

D'autres formes de réalisation de l'évideur de fruit ou de légume suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une illustration d'un évideur de fruits ou de légumes selon l'invention.
La figure 2 est une vue en perspective d'un fruit et d'une variante d'un évideur selon l'invention.
La figure 3 est une illustration en perspective d'un mode préféré d'un évideur selon la présente invention.
La figure 4 est une illustration d'une variante de l'évideur selon l'invention.
La figure 5 est une vue en coupe de la lame de l'évideur selon l'invention.

Sur les figures, les éléments identiques ou analogues portent les mêmes références.

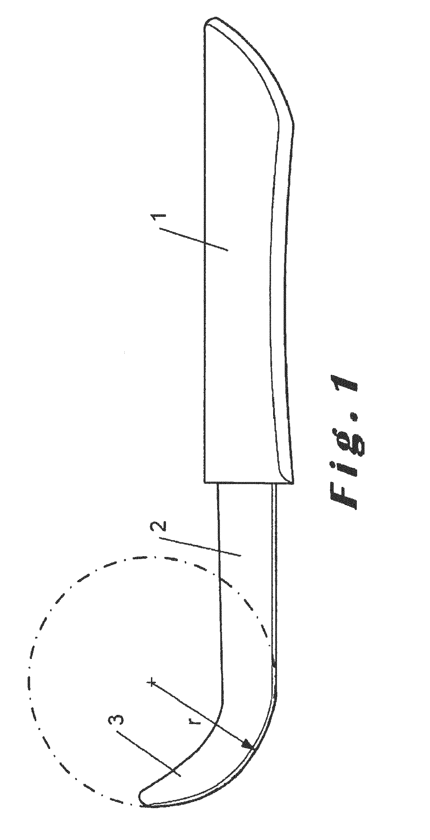

La figure 1 illustre un évideur de fruits ou de légumes selon l'invention qui comprend un manche 1 muni d'une lame de couteau qui présente une première partie 2 longitudinale et une deuxième partie 3 courbée vers la première face de la lame en direction du manche. La première partie 2 de lame étant située dans le prolongement du manche de sorte que le manche 1 et la première partie 2 de lame sont alignés respectivement dans un premier et deuxième plans sensiblement parallèles l'un à l'autre.

La première partie 2 longitudinale se situe dans le prolongement du manche 1 et présente principalement deux fonctions qui sont liées à sa forme longitudinale, à sa longueur et à son bord aminci tranchant.

La première fonction de la première partie 2 tranchante est liée à sa forme longitudinale et consiste à réaliser tout type de découpe. Dans la présente invention, la découpe d'un fruit ou d'un légume est visée. Ainsi, la découpe d'un fruit ou d'un légume peut être réalisée au moyen de la première partie 2 de lame qui peut, par exemple servir à couper un fruit en deux ou à inciser une partie de la chaire d'un fruit ou d'un légume. Cela pouvant être utile pour avoir accès à la surface de la chaire du fruit ou du légume. En effet, la première partie 2 de lame présente un bord tranchant au moins partiellement en son pourtour ce qui lui permet d'offrir une surface prête à inciser, par exemple la chaire d'un fruit.

La deuxième fonction de la première partie 2 de lame est liée à sa longueur qui est plus longue que celle de la deuxième partie 3. De cette façon, le passage entre la première partie 2 de lame et la deuxième partie 3 forme un point de pivot qui fait office de bras levier. De cette façon, la chaire peut être extraite du fruit ou du légume préalablement coupé. Ainsi, lorsque la chaire est découpée au moyen de l'évideur suivant l'invention, il suffit d'utiliser le point de pivot situé entre la première partie 2 et la deuxième partie 3 de la lame pour pouvoir faire levier et ainsi extraire la chaire du fruit ou du légume.

La deuxième partie 3 de lame est tranchante par la présence du bord aminci tranchant et présente une forme courbée qui est située dans le prolongement de la première partie 2 longitudinale. Elle présente, comme la première partie 2 de lame, deux fonctions qui sont cette fois liées au rayon de courbure r.

Comme décrit à la figure 1, la deuxième partie 3 de lame présente une courbure telle qu'un arc de cercle se forme. Cela permet de tracer un cercle (tracé en pointillé sur la figure) comprenant un arc de cercle et ainsi de définir un rayon de cercle bien déterminé.

Le rayon du cercle correspond dans le cas présent au rayon de courbure r de la deuxième partie 3 de lame.

Ainsi, l'évideur suivant l'invention qui présente un rayon de courbure compris entre 0,5 et 3 cm, de préférence entre 0,5 et 2,5 cm, plus préférentiellement entre 0,5 et 2 cm, avantageusement entre 0,7 et 2 cm permet de fournir un ustensile de cuisine facilitant l'évidement de fruits ou de légumes de toutes tailles car l'accès à la chaire du fruit ou du légume est rendu aisé. De plus, il a été observé que l'utilisation de l'évideur suivant l'invention permet de rapidement extraire la chaire de fruits ou de légumes, et ce d'une seule traite.

Ainsi et tel qu'il ressort de la figure 1, la première partie 2 de lame est longitudinale jusqu'au moment où une courbure de lame se forme définissant la deuxième partie 3 courbée de la lame.

La première fonction de la deuxième partie 3 courbée est d'attaquer la chaire d'un fruit ou d'un légume, qui est de préférence préalablement coupé en deux, par exemple au moyen de la première partie (2) de lame, comme expliqué ci-dessus.

La deuxième partie 3 de lame présente une deuxième fonction qui est de pouvoir inciser le fond de la chaire d'un fruit ou d'un légume au moyen de sa forme courbée et de son bord aminci tranchant de façon à évider le fruit ou le légume de sa chaire.

Lorsque l'utilisateur maintient l'évideur au niveau du manche 1 avec la première face de la lame orientée vers le haut, la deuxième partie 3 est courbée vers l'utilisateur. Lorsque l'utilisateur désire réaliser une découpe avec l'évideur selon l'invention, il oriente alors le côté du manche 1 et donc le pourtour de la lame munie du bord tranchant tel que décrit selon l'invention vers la chaire du fruit de sorte que le pourtour de la deuxième partie de lame incise la chaire du fruit pour atteindre le fond de celui-ci.

Ainsi, l'évidement d'un fruit ou d'un légume peut, par exemple consister en une découpe préalable d'un fruit en deux au moyen de la première partie 2 de lame longitudinale. La chaire du fruit est alors visible et peut être coupée en surface à l'aide de la deuxième partie 3 courbée de la lame qui peut atteindre le fond de la chaire du fruit. La première partie longitudinale 2 tranche ainsi la chaire dans sa circonférence et la deuxième partie 3 courbée peut inciser le fond de la chaire du fruit, ce qui permet d'inciser un morceau de chaire devant être extrait du fruit. L'extraction du morceau de chaire incisée est réalisée au moyen du point de pivot qui se crée entre le passage de la première partie 2 et de la deuxième partie 3 de lame. Ainsi la lame sert alors de bras de levier pour évider suffisamment le fruit de sa chaire.

De manière préférentielle, lorsque les incisions de la chaire sont réalisées, la chaire peut être extraite d'une seule traite sans réaliser de découpe inutile de la chaire du fruit. Cela a pour avantage de pouvoir extraire une grande quantité de chaire et ainsi limiter le gaspillage du produit.

L'évidement du fruit permet de l'utiliser pour réaliser des objets comestibles de décorations, par exemple pour contenir des préparations culinaires comme des farces.

Il a été constaté que l'évideur de fruits ou de légumes suivant l'invention permet d'évider rapidement, aisément et de manière fiable et reproductible des fruits et des légumes.

La lame de l'évideur peut être à double tranchant facilitant ainsi sa manipulation. L'évideur présente dans ce cas préféré une lame tranchante sur plus d'un côté de la lame.

La lame de l'évideur peut également être remplacée en cas d'usure et ainsi reformer après remplacement de la lame un nouvel évideur selon l'invention prêt à l'emploi.

Il est bien entendu que l'usage d'un tel ustensile est également avantageux pour les ménagères désirant pouvoir disposer d'un ustensile de cuisine efficace et fiable.

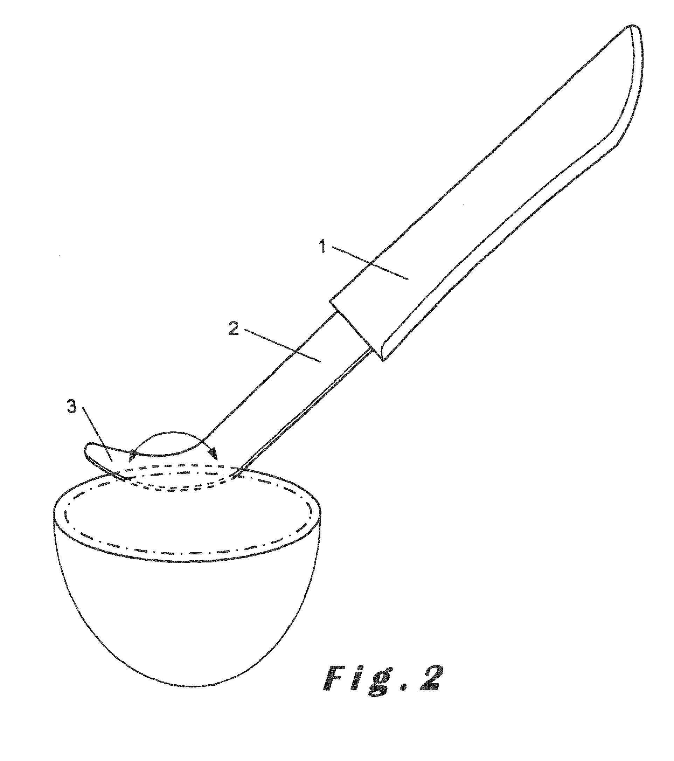

La figure 2 représente un évideur selon l'invention qui présente tous les éléments décrits à la figure 1. Cette illustration permet d'exposer la façon dont l'évideur de fruits ou de légumes peut être utilisé pour évider, par exemple un oignon.

Pratiquement, l'utilisateur désirant évider, par exemple un oignon saisit le manche 1 et découpe le légume en deux parties. Une des deux parties du légume étant illustrée à la figure 2. Ensuite, l'utilisateur incise au moyen de la deuxième partie 3 de lame qui présente un rayon de courbure compris entre 0,5 et 3 cm la chaire de l'oignon pour ainsi pénétrer au niveau de son coeur. Une fois que la lame a atteint le fond de l'oignon (voir figure 3), la première partie 2 de la lame permet dans un premier temps de réaliser une incision autour de la chaire du légume et la deuxième partie 3 de lame d'inciser en même temps la chaire contenue dans le fond du légume. Ainsi, un morceau de chaire est coupé et peut, dans un second temps, être extrait au moyen du point de pivot formé entre le passage de la première partie 2 et la deuxième partie 3 de lame. Ainsi, la lame sert à ce moment-là de bras levier. L'utilisateur n'a plus qu'à extraire la chaire préalablement incisée au moyen de la lame de l'évideur qui fait office de bras levier. De cette façon, l'évidement du légume est obtenu et permet en une seule traite d'extraire la quasi-totalité de la chaire du légume et ce avec précision, rapidité et efficacité.

L'évideur divulgué à la figure 2 ne se limite pas à une découpe d'un oignon. En effet, il permet d'évider de manière générale des fruits et des légumes de toutes sortes comme des kiwis, courgettes, aubergines, tomates, pommes, pommes de terres, etc.

La figure 3 illustre l'évideur de la figure 2 lorsqu'il atteint le fond de l'oignon et permet de représenter également le moment où la première partie 2 incise le pourtour de l'oignon et la deuxième partie 3 incise le fond de l'oignon pour extraire la chaire en surface en faisant levier à l'aide de la lame de l'évideur.

Comme la première partie 2 et la deuxième partie 3 de la lame sont munies d'un bord tranchant aminci, il est possible d'inciser le fruit avec une importante précision à la fois en surface de la chaire et au fond du légume, près de l'enveloppe du légume.

De manière avantageuse, la lame de l'évideur selon l'invention peut être munie sur toute sa surface exposée au milieu environnant d'un bord tranchant sur tout son pourtour ce qui offre à l'utilisateur une maniabilité encore plus préférentielle. En effet, la lame peut être aisément déplacée dans la chaire du fruit ce qui permet aussi d'améliorer la précision de la découpe.

De manière préférentielle, la deuxième partie 3 de lame de l'évideur décrit aux figures 1 à 3 suivant l'invention présente une longueur comprise entre 1 et 5 cm, de préférence 1,5 cm, plus préférentiellement, 2,5 cm, avantageusement 4,5 cm.

La figure 4 illustre un évideur préféré suivant l'invention qui présente une première partie longitudinale 2 et une deuxième partie 3 courbée qui forme un demi-cercle. De cette façon, le passage entre la première partie 2 longitudinale et la deuxième partie 3 courbée forme un U au bout de la lame de l'évideur. Ainsi, un espace d se crée entre la deuxième partie 3 et la première partie 2. L'espace d étant compris entre 1 et 4 cm, de préférence entre 1,5 et 3,5 cm, plus préférentiellement de 2,5 cm. Ce mode préféré permet d'évider encore plus aisément un fruit ou un légume.

La figure 5 est une vue en coupe de la lame de l'évideur selon la présente invention.

La lame de l'évideur selon l'invention présente une première face 4 et une deuxième face 5 qui sont reliées l'une à l'autre en leur pourtour par une troisième face 7 formant l'épaisseur de ladite lame au niveau de son pourtour.

Ladite première face 4 comprend une partie parallèle à ladite deuxième face 5 et une partie inclinée 6 s'étendant de ladite partie parallèle vers ladite troisième face 7 pour former un bord aminci et tranchant.

La partie inclinée 6 de ladite première face 4 forme avec ladite deuxième face 5 un angle γ compris entre 15 - 30 °, préférentiellement entre 16 - 25 °, plus préférentiellement entre 20 - 23 °.

Avantageusement, ladite partie parallèle à ladite deuxième face 5 est bordée au moins sur son pourtour exposé au milieu environnant par ladite partie inclinée 6.

De manière alternative, ladite partie parallèle à ladite deuxième face 5 est bordée sur tout son pourtour exposé.

Ainsi, le bord tranchant aminci peut s'étendre au moins partiellement sur la première partie 2 de la lame, sur la deuxième partie 3 de la lame ou sur les première et deuxième parties 2,3 de la lame.

De manière alternative, le bord tranchant est présent sur tout le pourtour de la première partie 2 de la lame exposée, de la deuxième partie 3 de la lame exposée ou sur les première et deuxième parties 2,3 de la lame exposée.

Dans l'ensemble des modes de réalisations exposés ci-avant, la mention d'un bord tranchant aminci est celui illustré à la figure 5. Plus précisément, la surface inclinée 6 qui s'étend de la partie parallèle vers ladite troisième partie 7 forme le bord aminci tranchant.

L'évideur selon l'invention présente une lame dont la matière est choisie dans le groupe constitué du fer, de l'acier, de l'inox, de la céramique et dont le manche 1 est en matière choisie dans le groupe constitué d'élastomères, de préférence d'élastomères thermoplastiques, du bois, de la céramique, d'inox, de la céramique.

Pour faciliter la prise de l'évideur selon l'invention, le manche 1 peut être muni d'un élément antidérapant.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Evideur de fruits ou de légumes comprenant un manche (1) et une lame de couteau présentant une première face (4) et une deuxième face (5), ladite lame comprenant une première partie (2) longitudinale et une deuxième partie (3) courbée, ladite première partie (2) étant fixée audit manche (1) et présentant une longueur supérieure à la longueur de ladite deuxième partie (3) de lame, ladite deuxième partie (3) de lame étant située dans le prolongement de ladite première partie (2), **caractérisé en ce que** ladite deuxième partie (3) courbée de ladite lame présente un rayon de courbure r compris entre 0,5 et 3 cm et **en ce que** lesdites première et deuxième faces (4,5) de ladite lame sont reliées l'une à l'autre en leur pourtour par une troisième face (7) formant l'épaisseur de ladite lame, ladite première face (4) comprenant une partie parallèle à ladite deuxième face (5) et une partie inclinée (6) s'étendant de ladite partie parallèle vers ladite troisième face (7) pour former un bord aminci et tranchant, ladite partie inclinée (6) de ladite première face (4) formant avec ladite deuxième face (5) un angle γ compris entre 15 - 30 °.

2. Evideur selon la revendication 1, dans lequel l'angle γ est compris entre 16 - 25 °, plus préférentiellement entre 20 - 23 °.

3. Evideur selon la revendication 1 ou 2, dans lequel ladite partie parallèle à ladite deuxième face (5) est bordée au moins sur son pourtour exposé par ladite partie inclinée (6).

4. Evideur selon l'une des revendications 1 ou 2, dans lequel ladite partie parallèle à ladite deuxième face (5) est bordée sur tout son pourtour exposé.

5. Evideur selon l'une des revendications 1 à 4, dans lequel ledit rayon de courbure est compris entre 0,5 et 2,5 cm, de préférence entre 0,5 et 2 cm, plus préférentiellement entre 0,7 et 2 cm.

6. Evideur selon l'une quelconque des revendications précédentes, dans lequel la première partie (2) longitudinale présente une longueur comprise entre 1 et 25 cm, de préférence entre 1 et 20 cm, plus préférentiellement entre 5 et 15 cm.

7. Evideur selon l'une quelconque des revendications précédentes, dans lequel la deuxième partie courbée (3) forme un demi-cercle.

8. Evideur selon l'une quelconque des revendications précédentes, dans lequel la lame est une lame à double tranchant.

9. Evideur selon l'une quelconque des revendications précédentes, dans lequel la lame est en matière choisie dans le groupe constitué du fer, de l'acier, de l'inox, de la céramique.

10. Evideur selon l'une quelconque des revendications précédentes, dans lequel le manche (1) est en matière choisie dans le groupe constitué d'élastomères, de préférence d'élastomères thermoplastiques, du bois, de la céramique, d'inox, de la céramique.

11. Evideur selon l'une quelconque des revendications précédentes, dans lequel le manche (1) est muni d'un élément antidérapant.
